# EUROPEAN PATENT APPLICATION

(11) **EP 1 037 419 A2**
(43) Date of publication of application: **20.09.2000**
(21) Application number: 00302061.7
(22) Date of filing: 14.03.2000
(51) Int. Cl.: H04H 1/02, H04H 1/00

(54) **Program links and bulletins for the delivery of digital audio**

(30) Priority: 18.03.1999 US 272633
(71) Applicant: Command Audio Corporation, Redwood City, CA 94065 (US)
(72) Inventor: Loewenthal, William J., San Mateo,California 94001 (US); Linden, Thomas M., Los Gatos, California 95030 (US)
(74) Representative: Needle, Jacqueline

(57) **Abstract**

An audio information device has a memory (16) in which a variety of pre-recorded program material is stored. A linking facility is provided connecting audio data files. The links are context related; whilst the user is listening to a first program, a display (38) is illuminated to indicate to the user that another program is available with related content. The user then presses a key on a keypad (44) to command play of the second, related file. Upon completion of the second file, play of the first file is resumed at the point of interruption. An alert bulletin facility is also provided whereby during listening to a first program, upon receipt in real time of current news such as a traffic report, the current news is played by interrupting the first program. At the conclusion of the bulletin, play of the first program is resumed at its point of interruption.

## Description

### FIELD OF THE INVENTION

This invention relates to provision of information and more specifically, to an audio information system device and the organization of its information content.

### BACKGROUND

U.S. Patents Nos. 5,406,626; 5,524,051; and 5,590,195 all issued to John O. Ryan disclose methods and systems for information dissemination using what is, in some embodiments, a dedicated audio receiver device; these patents are each incorporated herein by reference in their entirety. The disclosed service and system and similar currently known systems, permit a user to listen to specific information content when and where he wants to, independent of the time of transmission. A dedicated receiver, which is typically portable, extracts digitized alphanumeric data or compressed audio data from a transmission, for instance RF transmissions or a computer data link. The dedicated receiver stores the received data (as a set of data files) in a local (semiconductor or disk drive) memory. Hence this is not a typical radio, which only plays information being received in real time. The user of the receiver can then at any later time select, using a menu structure and control buttons, one of the data files for playback. Typically the transmitted data files are sent from a head end installation which assembles various program content for transmission via the selected transmission channel. The program content is, for instance, music, traffic, sports, news, "books-on-tape", and other types of information and entertainment.

Receivers of this general type are or soon will be available from several vendors which use data links such as the internet to transmit the files. However, the actual playback device for the internet-based receivers is in many respects similar to that disclosed in the above-referenced patents with the substitution of an Internet-connected personal computer for the disclosed radio/TV band receiver circuitry.

### SUMMARY

The present inventors have made significant improvements in the above-disclosed types of information dissemination systems. These improvements include the use of links between various data files (meaning here programs or parts of programs). These links advantageously allow the user to traverse from one data file to another data file, depending in some embodiments upon predetermined context related relationships. For instance, if the user is listening to a first program (data file) on sports and there is a reference in the program to a particular sports team, the receiver device may have in its local storage a second data file having content specific to that sports team. The device provides an indication, either audibly or visually, to the user, such as a beep, flashing light (LED), or icon, indicating the presence of the link.

Then the user pushes a particular control button (key) on the receiver control pad (keypad) to invoke the link and listen to the linked data file (second program) on the specific sports team. At the conclusion of play of the linked data file, control automatically returns to the point of interruption in the first program. One data file may have a number of such links and the links may be hierarchical. The actual nature of the links is context related and is typically determined by the head end which is the supplier of the various data files. There is no requirement, of course, for the user to invoke any particular link.

In another version, when the receiver is operating in a real time receive mode, that is actively receiving data file transmissions from the head end, alert type indications (bulletins) are provided, for instance news, weather, traffic, or sports updates. These alerts are not, however, context related to the current listened-to file but are instead transmitted in real time from the head end. Upon the indication of the receipt of the bulletin, the user may, if he wishes, invoke the bulletin (which is also transmitted as a digitized audio data file) and listen to the bulletin. Alternatively, the bulletins are played automatically upon receipt, without user intervention. Upon conclusion of play of the bulletin, control is automatically transferred to the point of interruption of the previously listened-to file. In either case, typically the bulletins must meet some condition pre-selected by the user in order to be brought to his attention and/or played. There may be a hierarchy of order of play, either in terms of the bulletins or the context related links.

Moreover, the user may choose in the bulletin situation to be told of or not told of the receipt of bulletins, (or to have automatic play or no play) depending on the bulletin category. For instance, the user may be interested only in weather bulletins and not in financial information bulletins. Conversely, the user may select only financial bulletins that are very specific, such as stock price quote changes for a particular stock. In this case the user programs his receiver to alert him only to bulletins in the desired category and/or automatically to play such bulletins.

Moreover, the present system and method are also applicable to other types of audio information systems, for instance telephone voicemail or a system with both audio and video stored material, such as the stored television program systems now being proposed.

Thus while the present disclosure emphasizes a dedicated audio information receiver device and associated service, this does not limit the invention.

### BRIEF DESCRIPTION OF THE FIGURES

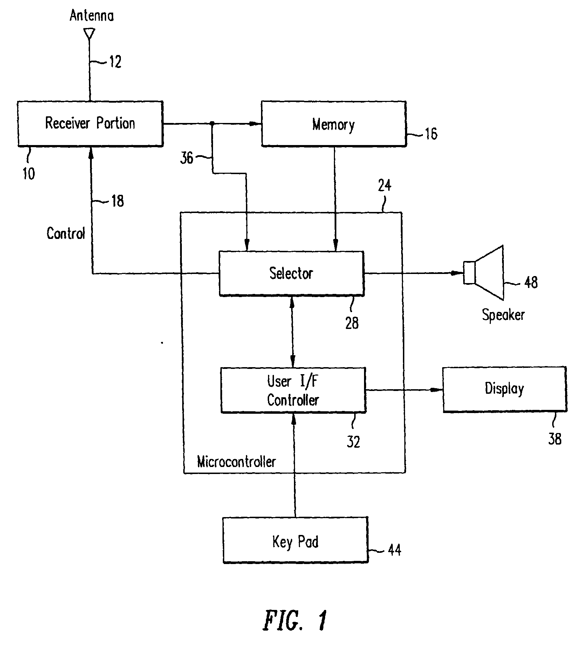

Fig. 1 shows a block diagram of a receiver in accordance with this invention.

### DETAILED DESCRIPTION

The following exemplary description of embodiments of this invention is directed to improvements in an information system of the type described in the above-referenced patents and also of other types of information appliances of the type commercially available or announced such as the Audio Highway Portable Highway Device, the Audible portable device usable with the Audible website, and others which are similar. Some of these systems communicate via the Internet and others use radio frequency or television transmissions; however the information transmission channel is not critical. The present invention is directed to the content and organization and manipulation of the information being delivered to the user rather than the transmission channel.

In accordance with this invention, a method and apparatus present, to a user, audio information that is topically relevant (context related) or of immediate nature (bulletins) by alerting the listener audibly and/or visually that the information is available for retrieval and/or playing it upon receipt. Thereby audio information that is related to or immediate in nature to the user is presented so that the user can listen to the information immediately rather than waiting for the completion of the existing audio program.

Thus in one embodiment the head end (transmission point) builds in context type relationships among selected programs to enable specific features in accordance with this invention. This may require human intervention at the head end, as described below.

For instance, while the user is listening to a movie review program, a command located in the program data file (the command being hidden to the listener) turns on a visual indicator, for instance, an LED or icon indicator on the LCD display of the information device (receiver) or provides a particular audible audio tone. When the corresponding key (or button) on the receiver control pad is pressed by the user upon hearing (or seeing) the indicator, the linked movie show time program (data file) is played, giving the user e.g. information about when the particular movie is being played and in what movie theaters. The link is embodied, e.g., in a header file attached to the data file. The header file contains a piece of information that relates it to another file (the linked file) thus establishing the link.

This is merely exemplary. Several such relationships are possible between programs of which only illustrative ones are disclosed here. In the bulletin relationship in one embodiment, when the listener is listening to Program A (typically a program is a single digitized audio data file although it may consist of several such files), Program A is automatically interrupted upon receipt at the device of Program B and Program B is immediately played. That is, Program A is immediately interrupted to play Program B. When Program B is completed, the play of Program A is resumed at the point of interruption. The device display panel shows Program B being played while Program B is being played. In this case, typically there is no user invocation of Program B. A typical application would be for community news, or an emergency bulletin, or a stock "update" of a stock which has been previously programmed by the user.

As stated above, the user typically programs his receiver to play only certain categories of such bulletins. The head end appropriately codes each transmitted bulletin, using a predetermined code, so the receiver can determine, upon receipt of the bulletin, if its receipt is to be indicated to the user and/or if it is to be played. Of course this bulletin mode is generally available only when the device is in its real time receive mode, that is, configured to receive transmitted information from the head end. If the device is being used only to replay previously transmitted programs and is not in its real time receive mode, receipt of bulletins is not possible. Some high priority bulletins (e.g. hurricane warnings) may be assigned a special code at the head end so that they are played automatically by all receivers receiving the bulletin transmission. In addition, the user can program his receiver to play bulletins (or categories of bulletins) automatically upon receipt, or only to indicate to him receipt of the bulletin for playback upon command, as described below.

In another sort of interruption which is context related, during normal play (or pause) of Program A, an indicator is provided such as a "More Info" LED blinking or an icon being illuminated on the receiver LCD display panel or an audible indicator, which indicates to the user that context related information (Program B) is available. If the user in response to the indicator inputs to the device the proper command, for instance by pressing a "More Info" button on the receiver keypad, the indicator is turned off and Program B is played from its start. At the termination of Program B, play of Program A is resumed at the point of interruption. While Program B is being played, this is so indicated on the receiver display. The above description of a movie showtime Program Being provided during a movie review program is an example of this embodiment.

Another example is, during playing of a news program, the playing of a commercial announcement. Another example is, during playing of a financial news program, providing a link to a program which is a stock quote of one of the mentioned stocks. Another example is a link invoked by the user to a traffic program during a news program. In either case these user invoked links are according to links defined by the head end, e.g. by a program director (a human or possibly a computer system at the head end.) The user of course has the option of playing the linked Program B or ignoring it. Any Program A may have numerous references to other linked programs which are context related, that is Programs B, C, D. Similarly, while playing linked Program B, Program B may have a context related link to Program E. Thus there may be a hierarchy of context related links.

In yet another embodiment, the program link is of a type pre-selected by the user when programming the device. In this case, the listener listens to Program A as usual. When Program A plays a word or phrase that both has a link and falls within the pre-selected category the device displays an indication of the availability of linked Program B. The indication is audible (e.g. a tone) and/or visible (a light or displayed icon on the receiver's display screen). If the user then presses the "More Info" button, which is the command to invoke the linked program, Program B is played. At this point, the system acts as if Program B is an interrupt to Program A as described above. Hence, if Program B is terminated, one reverts to Program A.

One embodiment is directed to the traffic information situation, that is, information about automobile traffic for drivers. Typically in this case the transmitted programs include regional traffic information for particular areas. In this case, traffic updates are transmitted from the head end in the form of bulletins. The user has programmed his device to alert him only to traffic bulletins coded to pertain to a particular geographical region or zone. Receipt of a new traffic bulletin at the device that is of interest is indicated to the user for instance, by the audible tone or illumination of the "More Info" indicator. Then in response when the user presses the "More Info" button on the receiver, only the most recently received traffic information bulletin is played. This eliminates repetition of traffic information to the particular user. For each particular user, his individual receiver keeps track of which traffic bulletins have been played and only plays the newly received ones.

Thus a hierarchy is provided of interrupts of newly received traffic bulletin alerts. This hierarchy is typically defined at the head end. For instance, there may be categories such as "emergency" bulletins versus "instant play" traffic bulletins. The emergency bulletin has a priority, as defined by the head end program director. Absent a particular priority, a last in-first out order is provided for bulletins. Typically, if there is a stack of pending bulletins which have not been played, so long as any one has still not been played the visible "More Info" indicator (e.g. LED or icon) remains on.

The associated computer programming for this system is readily understood by one of ordinary skill in the art. For the context related links, this is accomplished by inserting in each data file which invokes the link, at the salient point, a pointer to another data file. The pointer itself, which is clearly denoted as being other than ordinary audio information, is not itself per se apparent (audible) to the user. Instead it illuminates the "More Info" indicator or provides an audible tone. The receiver then looks for user key input (via the "More Info" button) which when received commands it to invoke the linked data file. Upon completion of play of the linked data file, a "go to" command at the end of that file is executed which resumes play of the first program (data file) at the point of interruption.

In the case of the alert bulletins, the head end transmits a particular "bulletin" code which is interpreted by the receiver device not as being audio information but instead as an indication of an alert program following. This in one version causes the "More Info" (or an "alert" indicator) LED or LCD icon to illuminate and/or the alert tone to be sounded. Upon receipt of the user command in response (via the "More Info" button) then the device plays the most recently received alert bulletin. Alternatively, if the alert bulletin has a particular high priority or is in a selected category, it plays automatically.

Since information devices of the type to which this invention is applicable have a variety of different types of displays and user controls, the user interface operation is adapted to conform to the particular configuration of the device, which may even be a general purpose computer. Generally these devices have both a visual (e.g. LCD and LED) display for indicating the current and other program choices as well as a facility for providing an audio and/or visual indicator of a link and/or alert. Such devices also include intelligence (e.g. a microprocessor or microcontroller) which responds to the alerts and/or links appropriately. Of course, in those receiver devices having no real time data receipt capability the alert feature is generally of limited or no use.

Fig. 1 shows in block diagram form a receiver in accordance with this invention. The block diagram of Fig. 1 is somewhat similar to the receiver shown in the above-referenced Ryan patents, but shows a somewhat different block organization to illustrate the present invention. It is understood that in terms of hardware components this receiver is similar to that disclosed in the above-referenced patents.

In Fig. 1 the receiver portion 10 receives the files containing the digitized audio data. In one embodiment these are received via a radio transmission at antenna 12, but this is not limiting and the files may be delivered through a variety of channels, such as dedicated radio stations, radio station subcarriers, television signal vertical blanking intervals, television station SAP transmissions, computer networks, cable television, telephone networks and systems, etc. The files, which may be in compressed and/or encrypted form, are, if necessary, subject in receiver portion 10 to decryption and decompression. It is to be understood that the decompression/decryption may take place at other points in the receiver device and not necessarily in the initial receiver portion 10. For instance this may be done just prior to play or just prior to storage in the memory.

The received data (programs) is then transmitted to memory 16, which stores the data files. Memory 16 is, e.g., semiconductor (e.g., flash) memory and/or small disk drive. In some cases only some of the received programs are actually stored in memory 16, under control of control signals provided on line 18 from the microprocessor/microcontroller 24.

Microprocessor 24, includes for purposes of this explanation, two main portions in terms of its operation. The first is the selector 28 and second is the user interface control 32. The selector 28, which is typically embodied in computer software executed by microprocessor 24, controls data input and output to the memory 16 and selects for play selected data files stored in the memory 16. In some cases certain received programs are transmitted directly from the receiver portion 10 to the selector 28 on lines 36. These programs would be the bulletins described above. That is, bulletins are stored in memory 16 and are played immediately upon user interaction.

The other relevant portion of the microcontroller 24 is the user interface control portion 32 (also embodied in software) which drives the audible/visible display 38, which may include LEDs and/or an LCD. Examples of the LED indicators are: No Reception; Low Battery; My Programs; Playlist 1; Playlist 2; Saved Shows; and More Info. Use of these will be better understood (to the extent they are not apparent) in light of the following explanation. The other part of the user interface is the keypad 44, which provides user input to the user interface control portion 32. Examples of the keypad 44 buttons are : My Programs; Playlist 1; Playlist 2; Saved Shows; Add; Remove; Previous; Pause/Play; Next; Scan Back; Scan Fwd; and More Info. Use of these will also be better understood in light of the following explanation.

The selector 28 selects a particular program from memory 16 (still in digitized data format) and provides it to, for instance, decryption and/or decompression circuitry (if needed) and voice synthesizing circuitry (neither shown). The resulting analog audio is then played through speaker (or earphones) 48. The control portion 32 interprets and uses the links as described herein and also deals with the bulletins.

The following describes in somewhat more detail operation of the links. Given this disclosure, one of ordinary skill in the art could write the computer code (e.g., in the C language) to carry out the links and bulletins described herein. Some of this code is resident in and executed by the receiver microcontroller 24 as described above. Some is supplied at the head end and inserted into the transmitted program.

The receiver also includes certain other features (supported by its microcontroller) to carry out certain of its functions. For instance, typically the receiver operates in several user selected modes, including a program guide mode (i.e., a menu mode) allowing the user to select and add programs of interest into various lists maintained in the receiver memory 16 which are customized to that individual user. These modes are supported by selector 28 and control 32. The receiver also operates a playback mode in which the user plays back programs, as described above. In addition to the More Info LED (or icon) described above (part of display 38), there is the associated More Info button (on keypad 44), which is pressed by the user in order to play back the displayed more information. There is also on the keypad the Next button which allows moving to the next program, and the Previous button to step back to the previous program. As described above, the receiver also operates in a receive only mode where it is not playing anything back but merely receiving transmissions from the head end.

Road traffic information may be accessed by a traffic alert option set in the receiver. This is typically accomplished when the receiver is operating in its manual playback mode. Manual play means bulletins and alerts are played when the user presses "More Info". Instant play means, the current program being received is paused, the bulletin is played, and the user then returns to the current program. The setting "manual" versus "instant" is a user selection for all types of alerts.

The program guide, which is supported by the selector 28 in the receiver and is a menu, lists for display the set of available program topics and the set of programs available within each topic. Topics are presented, for instance, in alphabetical order. Programs within a given topic may also be presented in alphabetical order, although of course this is not a requirement. The program guide is at least a two level menu hierarchy, for topics and programs.

The user accesses his program guide (in the receiver program guide mode) via keypad 44 and may add programs of interest onto various program lists maintained by him by selector 28. Examples of lists are "My Programs", "Playlist 1", and "Playlist 2." Any program added to Playlist 1 or Playlist 2 is automatically added to the My Programs list. Therefore, in this example Playlist 1 and Playlist 2 are subsets of My Programs.

It is to be understood that in one embodiment the head end is a (radio) transmission facility for a particular city or region and the user subscribes to this service transmitted by the head end. When the user visits another city or region, there is a possibility of his receiving a "visitor" program relating to the similar service in the visited city.

Also, there are saved programs, which are programs that the user started to listen to or listened at some point and interrupted and indicated he wished to be saved in memory 16. This is done by pushing the "Add" and "Saved Shows" buttons. This means that a saved program may or may not be in the current My Programs list.

The My Programs list is ordered alphabetically by topic and then (within the topic) alphabetically by Program As described above. When programs are added to Playlist 1 or Playlist 2, they are added to the end of the current list. The user may reorder the sequence using a reorder list function within the receiver's options operational mode. Within the saved programs, programs are ordered by the time that they are saved where the most recently saved program is ordered first.

All programs are presented when moving through the My Programs list, if a current edition is unavailable (has already been listened to) a Program Availability message plays. Only available editions or versions of programs (i.e. Nightline has a January 18th edition which will be overwritten by the 19th edition) are presented when moving through Playlist 1 or Playlist 2. Once a user has listened to a version, that version is deleted in order to free memory space.

When the receiver is in its playback mode and the user presses the keypad buttons Playlist 1 or Playlist 2, the associated programs are played according to the current ordering. The Next and Previous buttons allow the user to move between the programs within a list in a stepwise fashion (i.e. a single button press moves to the next or previous program, respectively).

Beyond these ordered playlists, there are relationships among selected programs to enable specific features of the program service. For example, while listening to the "movie review" program, the More Info LED is illuminated (or blinks). When the keypad More Info button is pressed by the user in response, the "movie show time" program is played. An example (not using the More Info button) is: upon completion of a "Dr. Dean" program (a program featuring a person named Dr. Dean), a local radio station promotional program is played. Relationships commonly incorporate use of the More Info LED (or icon) and "More Info" button.

Relationships may be defined by the head end or by the selector 28. The above "Dr. Dean" example is defined by the head end.

Several relationships are possible between programs. To distinguish the various desired user behaviors that the relationships exhibit, we use herein (for purposes of this explanation) syntax of the form [Name ::=] Aᵣₑₗ B. This syntax denotes two programs, A and B, which exhibit the behavior defined by the relationship ᵣₑₗ. This syntax may be useful for specifying the supporting code (software). Specific relationships may associate a program Name with the combination Aᵣₑₗ B. Relationships (listed here as I, II, etc.) are:

### I. C::=A ∥ B {meaning Program A is concatenated with Program B and is identified to the user as a single Program C}

### The head end defines this relationship.

The receiver LCD display 38 shows Program C while Program A or Program B is playing. After listening to Program A, Program B is played. With respect to the above described receiver keypad buttons (those allowing program selections), the behavior is "as if" Program B is appended to Program A. That is, pressing the Next button moves to the program following Program A in the current list (i.e., it does not move to Program B). Also, pressing the Scan button during the last segment of Program A moves to the start of Program B.

### Examples:

- Example 1:: Dr. Laura ::= Dr. Laura Hr 1 || Dr. Laura Hr 2 || Dr. Laura Hr 3
- Example 2:: Dr. Dean ::= Market header promo || Dr. Dean Hr 1 || Market trailer promo
- Example 3:: Dr. Bob ::= Advertisement header || Dr. Bob Hr 1 || Advertisement trailer

### II. A ⇔ B {meaning A has affinity with B}

The head end defines this relationship. If the user accesses the program guide and adds Program A to his lists (My Programs, Playlist 1 or Playlist 2), then programs with affinity to Program A are also added to the list. This is a symmetric relationship. That is, if A ⇔ B then also B ⇔ A. If Program A is removed from the My Programs list by the user, then all programs with affinity to Program A are also removed from the My Programs list.

### III. A ! B {meaning A is interrupted by B}

The selector 28 defines this relationship. The user has control over some of these settings within the receiver's setup mode of operation. There are the "bulletins" or "alerts" described above.

While listening to Program A, Program B is played. The behavior is "as if" Program A is immediately interrupted to play Program B. (If the receiver is in its receive only mode, the interruption occurs when the receiver is switched to its Play Only or Play and Receive modes.) When Program B is completed, play of Program A resumes at the point of interruption. The receiver LCD display 38 shows "Program B" while Program B is playing.

### Examples:

- Example 1:: Community News ! emergency bulletin
- Example 2:: Major League Sports ! stock alert
This assumes a Stock Alert Option of the receiver is set to Instant Play. Also, a tone is emitted by the receiver prior to playing the stock alert.
- Example 3:: Nightline ! traffic alert
This assumes the region containing the alert is in the My Programs list and that the Traffic Alert Option of the receiver is set to the Instant Play mode. Also, a tone is emitted by the receiver prior to playing the traffic alert.

### IV. A @=> B

The receiver or the head end may define specific @=> relationships.

While playing (or paused during playing) a segment of Program A, the More Info LED on the receiver display 38 blinks. If the More Info button is pressed by the user in response, the LED is turned off and Program B is played. The control functionality is the same as A => B. The receiver display 38 shows "Program B" while Program B is playing.

### Examples:

- Example 1:: Movie Review @=> Movie Showtime (defined by the head end).
- Example 2:: Morning Edition @=> Starbuck Coupon (defined by the head end).
- Example 3:: My Portfolio IBM @=> IBM related stock story (defined by the head end).
- Example 4:: Program @=> local station promo (defined by the head end).
- Example 5:: Program @=> stock alert (defined by the receiver). This assumes the Stock Alert Option is set to Manual Play.
- Example 6:: Program @=> non-emergency bulletin (defined by the receiver).
- Example 7:: Program @=> new/updated regional traffic alert (defined by the receiver). This assumes that the region containing the alert is in the My Programs list and that the Traffic Alert Option is set to Manual Play.

### V. A => B

The selector 28 with control 32 defines this relationship.

While listening to a segment of Program A, if the receiver More Info button is pressed, Program B is played With respect to the user control buttons, the behavior is "as if" Program B is inserted into Program A at the point the button is pressed. That is, pressing the Next button moves to the program following Program A in the current Playlist. The receiver display shows Program A while Program B is playing.

### Examples:

- Example 1:: My Portfolio IBM => IBM extended quote
- Example 2:: While playing a program in playback mode => Day and Date of current edition
- Example 3:: In Program Guide mode viewing a program title => Program Availability message

Two exemplary approaches to creation of what are called here "Hot Topics" are:
1. During his normal processing of Program A, a person (program director) at the head end recognizes that the content is related to a specific "Hot Topic" and tags Program A with a special code at that time. The receiver selector 28 recognizes these tagged programs from the tag and accumulates them into the "Hot Topic" program. (Note that this approach requires knowledge in the selector on how to accumulate the tagged items. The items within a "Hot Topic" are unordered and potentially only loosely related.)
2. Similarly, a person at the head end recognizes content and tags the program. The tags accumulated during a given period (day, week, etc.) represent a suggested list to the person at the head end who creates a unique "Hot Topic" program. (Note that this approach requires no special handling in the receiver. It also insures a level of quality imposed on the final program.)

These tasks typically require human intervention.

Road traffic data exhibits a unique behavior when a traffic alert option mode in the receiver is set to manual play. In particular, each "edition" of a regional traffic program contains all active traffic incidents. Incidents within the edition are ordered with new and updated incidents before incidents that have not changed. When the selector 28 detects new/updated incidents exist it illuminates the More Info LED on the display 38. When the More Info button is pressed in response by the user, only the new/updated incidents are played.

Similarly, only new/updated incidents are played when the traffic alert option is set to instant play. When the traffic alert option is set to off and the user plays the program directly from a playlist, the entire traffic edition is played.

"Coincidental" More Info events are supported - for example, the More Info LED blinks for an IBM related stock story at the same time a new traffic edition (with new incidents) arrives at receiver portion 10.

There is no limit on the number of events at any one time.

When multiple events exist the following is an example of priorities:

A ! B events play prior to any other event (but do not interrupt an event that is currently being played).

An Emergency bulletin plays prior to instant play traffic events. Instant play traffic events play prior to instant play stock events. A@=>B events play prior to A => B events. If multiple A @=> B events exist, traffic events are played first and extended stock quotes are played last. The remaining are played in LIFO order (last in first out).

Pressing the Next button moves control to the next event.

Pressing the Scan button moves control to the next segment within the current event (or if the end of the current event is reached, will move to the next event).

There is effectively an LED (light) action at the display associated with every event. That is, as long as any event has not been played, the More Info LED remains on. (Note that the More Info LED is not on when the receiver is powered by its batteries in receive only mode, to conserve power.) For stock alerts, the LED remains on whenever an alert condition is true and is off otherwise. For traffic alerts, the LED is on whenever any new or updated incidents exist in the latest edition. After 15 minutes, if no traffic edition arrives, the LED is turned off by control 32.

The system has the following additional capabilities in one embodiment:

A related program may be missing. For example, Dr. Laura Hr 1 || Dr. Laura Hr 2 || Dr. Laura Hr 3 and Hr 2 does not arrive at the receiver. The receiver selector 28 bypasses the missing program (e.g., equivalent to Dr. Laura Hr 1 || Dr. Laura Hr 3).

Programs may have multiple relationships. For example, a local "header" and "trailer" around a national program:. A => B => C and D => B => C.

Methods and systems in accordance with this invention include various adaptations for different applications. For instance, in the telephone voicemail context the user interface device is the standard office telephone set, and the head end (and storage) is the voicemail server. The links are typically between stored messages (for instance linking messages from the same caller) prompting the user to go from a first stored message from that caller to a second (non-consecutive in terms of time) message from that caller. In this case the individual messages (conventionally stored in the voicemail system server as data files) correspond to the programs described above. The stored messages (typically digitized audio data in voicemail systems) are in effect sent to each subscriber's account in the server. The user indications of existence of a link would be a special audible tone and/or a light or indicator on the user's telephone set. Similar adaptations are suitable for, e.g., the above-mentioned proposed television storage systems for linking stored TV programs.

This disclosure includes copyrighted material; permission is given for facsimile reproduction of this patent document, but all other copyrights whatsoever are reserved.

This disclosure is illustrative and not limiting; further modifications will be apparent to one skilled in light of this disclosure and are intended to fall within the scope of the appended claims.

## Claims

1. A method of supplying audio information to a user, comprising the steps of:
sending a plurality of data files, each data file containing digitized audio data;
providing a link in at least one of the data files to another of the data files;
indicating the link to the user, while playing to the user the data file having the link;
in response to the user, interrupting the data file being played and playing the linked data file; and
upon conclusion of playing the linked data file, resuming play of the interrupted data file at the point of the interruption.

2. A method as claimed in Claim 1, wherein the indication is audible or visible.

3. A method as claimed in Claim 1 or Claim 2, wherein the user response is via a user operated button.

4. A method as claimed in any of Claims 1 to 3, wherein the link is related to a context of the file having the link.

5. A method as claimed in any preceding claim, further comprising setting the link prior to the sending of the data files.

6. A method of supplying audio information to a user, comprising the steps of:
sending a plurality of data files, each data file containing digitized audio data;
the user selecting amongst a set of conditions;
comparing the sent data files to the selected conditions; and
playing to the user a data file which matches the selected conditions.

7. A method as claimed in Claim 6, further comprising the steps of:
alerting the user to the receipt of a data file that matches; and
the user then determining whether to play the data file.

8. A method as claimed in any preceding claim, wherein selected data files contain information about news, sports, weather, traffic conditions or financial information.

9. A method as claimed in any of Claims 1 to 7, wherein selected data files contain a telephone message.

10. An audio device comprising:
a receiver portion which receives files sent to the receiver and which contain digitized audio data;
a memory coupled to the receiver portion, and which stores a plurality of the received data files;
a selector coupled to the memory to select for audible play a selected one of the data files, wherein at least one of the data files includes a link to another data file;
an indicator coupled to the selector and which provides an indication of the link; and
a control coupled to the selector and which receives input from the user and in response interrupts a data file being played by the selector and plays the linked data file, wherein upon conclusion of playing the linked data file, play is resumed of the interrupted data file at the point of the interruption.

11. An audio device as claimed in Claim 10, wherein the link is related to a context of the file having the link.

12. An audio device as claimed in Claim 10 or Claim 11, wherein the link is set prior to the sending of the data files.

13. An audio device comprising:
a receiver portion which receives files containing digitized audio data;
a memory coupled to the receiver portion, and which stores a plurality of the receiver data files;
a selector coupled to the memory to select for audible play a selected one of the data files;
an indicator coupled to the selector and which indicates receipt of a second data file which matches predetermined conditions; and
a control coupled to the selector and which interrupts a data file being played by the selector and controls play of the data file which matches the predetermined conditions, wherein upon conclusion of the playing of the second data file, play is resumed of the interrupted data file at the point of the interruption.

14. An audio device as claimed in Claim 13, wherein the indicator alerts the user of the receipt of a data file that matches, and further comprising a user input for the user determining whether to play the data file.

15. An audio device as claimed in any of claims 10 to 14, wherein the indicator is audible or visible.

16. An audio device as claimed in any of claims 10 to 15, further comprising a keypad coupled to the control.

17. An audio device as claimed in any of Claims 10 to 16, wherein selected data files contain information about news, weather, sports, traffic or financial information.

18. An audio device as claimed in any of Claims 10 to 16, wherein selected data files contain a telephone message.
